(19) **Europäisches Patentamt**

**European Patent Office**

**Office européen des brevets**

(11) Veröffentlichungsnummer: **0 210 555**

**A1**

## (12) EUROPÄISCHE PATENTANMELDUNG

(21) Anmeldenummer: 86109884.6

(22) Anmeldetag: 18.07.86

(51) Int. Cl.⁴: **B23C 1/12**

(30) Priorität: 24.07.85 DE 3526493

(43) Veröffentlichungstag der Anmeldung:
**04.02.87 Patentblatt 87/06**

(84) Benannte Vertragsstaaten:
**AT BE CH DE FR IT LI NL SE**

(71) Anmelder: **Maschinenfabrik Reichenbacher GmbH**
**Rosenauer Strasse 32**
**D-8635 Dörfles-Esbach(DE)**

(72) Erfinder: **Reichenbacher, Winfried, Dipl.-Ing.**
**Von-Werthern-Strasse 8**
**D-8635 Dörfles-Esbach(DE)**
Erfinder: **Beyer, Paul-Heinz, Dipl.-Ing.**
**Hintere Saalfelder Strasse 7**
**D-8635 Dörfles-Esbach(DE)**
Erfinder: **Zarske, Wolfgang**
**Hennebergerstrasse 2⁴**
**D-8632 Neustadt-Fürth a. Berg(DE)**

(74) Vertreter: **Eitle, Werner, Dipl.Ing. et al**
**Arabellastrasse 4 Sternhaus**
**D-8000 München 81(DE)**

(54) **Arbeitskopf.**

(57) Die Erfindung beschreibt einen Arbeitskopf, insbesondere Fräskopf, mit einer Frässpindel und einem daran über eine Spannaufnahme befestigten Werkzeug, wie sie insbesondere für Bearbeitungszentren mit mehreren Bewegungsachsen Verwendung finden. Diese Bearbeitungszentren weisen vorwiegend drei Hauptachsen für translatorische Bewegungen nach X,Y und Z und mindestens eine zusätzliche Bewegungsachse auf. Erfindungswesentlich dabei ist, daß mindestens zwei der zusätzlichen Bewegungsachsen (4,5,6) in dem Arbeitskopf vorgesehen sind und daß sich diese Achsen im Arbeitspunkt (13) des Werkzeuges (12) schneiden. Hierdurch ist der große Vorteil gegeben, daß auch bei zusätzlichen Bewegungen der Schnittpunkt der Bewegungsachsen ständig auf den gleichen aktiven Arbeitspunkt am Werkzeug fällt. Eine optimale Programmierungsarbeit mit nur wenigen Parametern und keiner Nachstellkorrektur ist hiermit möglich. Der Arbeitskopf weist einen 45° geneigten Schwenkarm auf, welcher an seinem einen Ende die vertikale vierte Schwenkachse (4) und an seinem anderen Enden die um 45° zur vierten Achse geneigte fünfte Achse (5) trägt. Um die fünfte Achse verschwenkbar ist ein Verschwenkblock (7) am Schwenkarm (1) angeordnet, an welcher in vorteilhafter Weise ein Fräskopf (10) mit Spannzange (11) und Werkzeug (12) verschwenkbar angeordnet ist. Der Fräsermotor (10) ist zudem über eine Führung (14) entlang einer sechsten zusätzlichen Achse translatorisch beweglich angebracht. Die sechste Achse dient einem Längenausgleich bei Werkzeug unterschiedlicher Länge.

FIG. 1

## Arbeitskopf

Die Erfindung bezieht sich auf einen Arbeitskopf, insbesondere einen Fräskopf nach dem Oberbegriff des Anspruches 1, wie er insbesondere an Bearbeitungszentren in der holzbearbeitenden Industrie Verwendung findet.

Die Erfindung wird im weiteren an Hand einer Ausführungsform als Fräskopf beschrieben. Als Arbeitskopf ist jedoch neben dem Fräskopf auch ein Bohr-oder Schleifkopf zu verstehen, wobei dann die Besonderheiten insbesondere eines Bohrkopfes vom Fachmann ohne weiteres mit in den Erfindungsgedanken einbezogen werden können.

Bearbeitungszentren mit mehreren Bewegungsachsen sind in unterschiedlichster Ausführungsform bekannt. Sie weisen allesamt mindestens drei Achsen für translatorische Bewegungen auf, beispielsweise eine erste Achse für die Querbewegung in bezug auf Tisch oder Werkstück, eine zweite, Y-Achse, für die Tiefenbewegung, und eine dritte Z-Bewegung als Höhenbewegung, meist durch das Werkzeug bzw. die Arbeitsspindel ausgeführt. Zusätzlich können dann noch weitere Achsen für translatorische Bewegungen oder Schwenkbewegungen vorgesehen sein. Bei Fräsmaschinen ist meist die Frässpindel vertikal fest, d.h. nur verschieblich und schwenk-oder drehbar einstellbar, angeordnet.

Die zusätzlichen Achsen dieser bekannten Bearbeitungsmaschinen gehen nicht durch den aktiven Arbeitspunkt des Werkzeuges hindurch. Daher muß bei jeder Bewegung einer der zusätzlichen Achsen ein Nachstellen über die X-,Y- oder Z-Hauptachsen vorgenommen werden, um den Arbeitspunkt des Kopfes-fortschreitend auf den tatsächlichen Arbeitspunkt des Werkzeugs einzustellen. Dies führt insbesondere bei automatisch gesteuerten Bearbeitungsmaschinen, wenn räumlich geformte Teile zu bearbeiten sind, zu einer komplexen Programmiertätigkeit, da fortschreitend eine Koordinatenanpassung beachtet werden muß.

Aufgabe der Erfindung ist es, einen Arbeitskopf anzugeben, mit Hilfe dessen räumlich geformte Teile an ihrer Außenkontur optimal auch vollautomatisch bearbeitet werden können, ohne daß eine aufwendige Programmiertätigkeit notwendig ist.

Diese Aufgabe wird durch einen Arbeitskopf mit den Merkmalen des Anspruches 1 gelöst.

Demgemäß sind mindestens zwei zusätzlichen Bewegungsachsen im Arbeitskopf vorgesehen, wobei sich diese Achsen stets im Arbeitspunkt des Werkzeuges schneiden. Hierdurch wird es erstmals möglich, daß zusätzliche Arbeitsbewegungen durch das Werkzeug durchgeführt werden können, ohne daß laufende Achskorrekturen durchgeführt werden müssen. Denn auch bei vollautomatischer Programmierung der zusätzlichen Bewegungen wird immer der Arbeitspunkt im Schnittpunkt der Bewegungsachsen liegen, wodurch eine nur relativ einfache Programmierung der Bewegungsabläufe stattfinden muß.

Es ist von Vorteil, wenn die erste zusätzliche Achse, hier die vierte Achse, eine Schwenkachse für den gesamten Arbeitskopf ist, wobei diese vierte Achse mit der Z-Hauptachse gleichgerichtet angeordnet ist. D.h. die vierte Achse ist eine Vertikalachse.

Des weiteren ist von Vorteil, wenn die zweite zusätzliche Achse, hier die fünfte Achse, eine Schwenkachse ist, die zur vierten Achse geneigt angeordnet ist. Als besonders geeignet erweist sich hier eine Neigung für die fünfte Achse um 45° in bezug auf die vierte Achse. Die vierte und die fünfte Achse schneiden sich dabei im Arbeitspunkt, also im aktiven Punkt des Werkzeuges. Im Falle eines Fräskopfes und dabei beim Einsatz eines Fingerfräsers liegt der aktive Arbeitspunkt auf der Spitze des Fräsers. Bei Ausüben beider Schwenkbewegungen, also um die vierte und die fünfte Achse, wird sich dieser Schnittpunkt nie verändern, so daß die einfachst mögliche Programmierbarkeit gegeben ist.

Erfindungsgemäß sind die vierte und fünfte Achse über einen Schwenkarm miteinander verbunden, d.h. es ist ein Schwenkarm vorgesehen, der beide Achsen aufweist. Dieser Schwenkarm ist in vorteilhafter Weise, ausgehend von der vierten Achse, um 45° zu dieser nach unten geneigt ausgebildet. Hierdurch wird die Anordnung der beiden Bewegungsachsen wesentlich erleichtert. Des weiteren ist vorteilhaft, wenn an der unteren Innenseite des Schwenkarmes eine die Arbeitsspindel mit Werkzeug tragender und um die fünfte Achse verschwenkbarer Schwenkblock angeordnet ist. Mit Hilfe dieses Schwenkblockes, der im Vergleich zu seiner Schwenkebene senkrecht zur fünften Achse ausgerichtet ist, kann die in diesem Block im Verhältnis zur Schwenkebene um 45° geneigt angeordnete Arbeitsspindel um die fünfte Achse in einem Winkel von 45° gedreht werden. In Kombination der Bewegungen der vierten und der fünften Achse können somit praktisch alle Positionen des Werkzeuges um den Arbeitspunkt herum eingenommen werden, wobei jeweils immer nur zwei Achsen in der Programmierung einkalkuliert werden müssen.

Erfindungsgemäß ist von besonderem Vorteil, wenn zwischen Arbeitsspindel und Schwenkblock eine zusätzliche Führung für eine translatorische Bewegung entlang einer dritten zusätzlichen Achse, also hier einer sechsten Achse, vorgesehen ist. Diese sechste Achse ist gleichgerichtet mit der durch Arbeitsspindel und Werkzeug führenden Achse. Somit ist es möglich, durch die Bewegung entlang der sechsten Achse einen zusätzlichen Längenausgleich zu erreichen, so daß bei Verwendung von kürzeren oder längeren Werkzeugen lediglich für die sechste Achse ein Parameter zusätzlich eingegeben werden muß, um die gesamte Programmierung für die entsprechende Werkzeuglänge umzusetzen. Beim Stand der Technik müßte für einen solchen Fall eine relativ komplexe Ausgleichsprogrammierung über die Hauptachsen vorgenommen werden. Durch die Anordnung der sechsten Achse wird die Programmiertätigkeit weitgehendst vereinfacht.

Insbesondere in der Holzbearbeitung und da beispielsweise in der Sitzmöbelindustrie, werden relativ komplexe Oberflächen bearbeitet. So weist z.B. ein Stuhl, bei welchem Lehne und Sitz in einem Stück gefertigt sind, eine Fuß-Lehne-Profilierung auf, die außen umfräst werden muß. Durch diese gebogene bzw. geschwungene Werkzeugkontur wird, wenn nur die drei Hauptbewegungen nach X,Y und Z und eine zusätzliche Verschwenkung möglich wäre, sich der Arbeitspunkt bei der Verfolgung des Werkstückprofils ständig ändern. Es wäre folglich eine wiederholte bzw. eine stetige Nachstellung notwendig, was eine sehr komplexe Programmierarbeit erfordert. Durch den Arbeitskopf nach der Erfindung entfällt jegliche Nachstellarbeit, da bei der Verfolgung des Werkstückprofils der Arbeitspunkt des Kopfes stets im aktiven Punkt auf dem Werkzeug bleibt.

Eine besonders kompakte Ausführungsform wird erzielt, wenn im Falle beispielsweise eines Fräskopfes als Arbeitsspindel direkt ein Arbeitsmotor, also ein Fräsermotor verwendet wird, an welchem direkt eine Spannzange für das Fräswerkzeug angeordnet ist.

Nachfolgend wird die Erfindung an Hand eines Ausführungsbeispieles als Fräskopf unter Bezug auf die Zeichnung näher beschrieben.

Es zeigt:

Fig. 1 eine perspektivische Ansicht auf einen Fräskopf mit in ihm angeordneten drei zusätzlichen Achsen, die Frässpindel in einer vertikal und drei horizontal Bewegungen zeigend, und

Fig. 2 eine andere perspektivische Ansicht des Fräskopfes nach Fig. 1, mit der Frässpindel in drei in der gleichen Vertikalebene befindlichen Positionen.

Der Arbeitskopf bzw. der Fräskopf nach der Erfindung besteht aus einem Schwenkarm 1, welcher an seinem einen Ende ein Schwenklager 2 in Form einer Bohrung oder anderen bekannten Ausführung aufweist. Mit Hilfe dieses Schwenklagers 2 ist der Schwenkarm 1 um eine vorzugsweise vertikale Schwenkachse 4 (4. Bewegungsachse) drehbar gelagert. Diese vierte Bewegungsachse kann, wie bereits erwähnt, gleichgerichtet sein zu der Z-Hauptachse (3.Achse).

Der Schwenkarm 1 ist um 45° nach unten geneigt im Verhältnis zur vierten Achse.

An seinem äußeren Ende trägt er im wesentlichen senkrecht zu seiner geneigten Erstreckung einen Antrieb 4 mit einer fünften Achse mit dem Bezugszeichen 5. Die fünfte Achse ist folglich ebenfalls um einem Winkel von 45° zur vierten Achse geneigt.

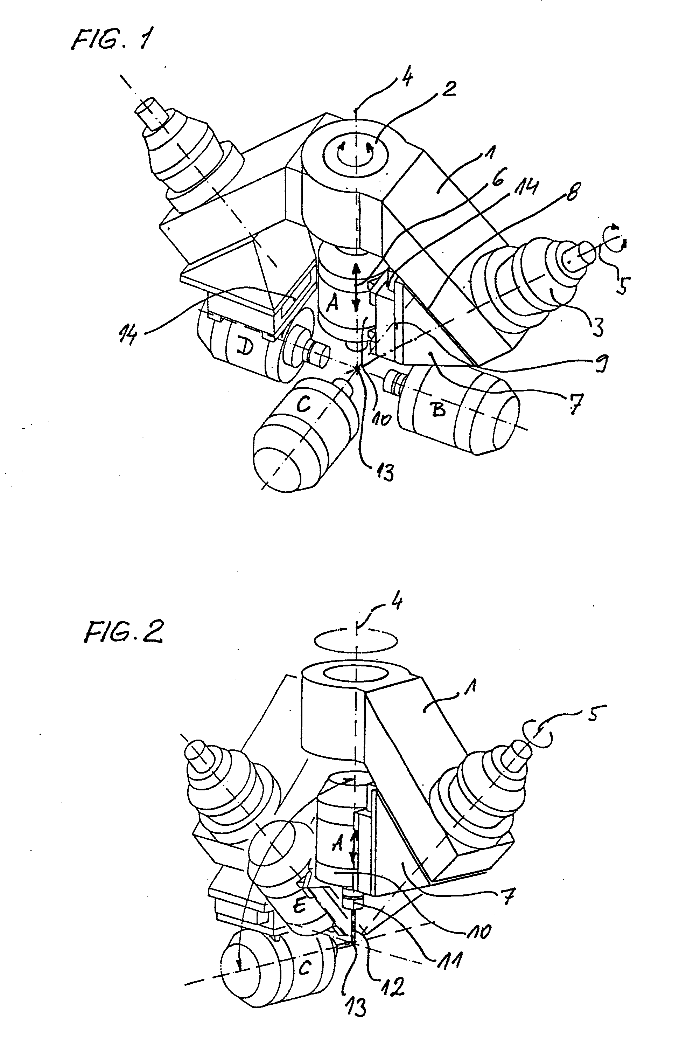

An der durch den Arm 1 hindurchreichenden Welle des Antriebes 3 ist ein Schwenkblock 7 befestigt, welcher somit in einer Schwenkebene 8 zwischen Block 7 und Arm 1, die senkrecht zur Achse 5 und um 45° zur Achse 4 ausgerichtet ist, gedreht bzw. verschwenkt werden kann. Der Schwenkarm weist an seiner einen, in Fig. 1 dargestellten Position, die eine 0-Verschwenkung zeigt, eine Aufnahmefläche 9 auf, die einen Fräsermotor 10 mit Spannzange 11 und Werkzeug 12 trägt. Die Aufnahmefläche und somit Fräsermotor und Werkzeug sind in der 0-Stellung parallel zur vierten Achse ausgerichtet. Sie sind jedoch immer in einer 45°-Position zur Schwenkebene 8 und somit zum Schwenkarm 1 ausgerichtet. Durch diese 45°-Neigung des Fräsermotors und des Werkzeuges kann durch Verschwenken um die fünfte Achse stets mit der Motorachse jede Position der Erzeugenden eines Konus eingenommen werden. Durch die Kombination der Bewegung des Schwenkarmes 1 um die vierte Achse und die Bewegung des Motors um die fünfte Achse kann praktisch der ganze Raum rund um einen Schnittpunkt der vierten und der fünften Achse, der gleichzeitig der Arbeitspunkt 13 ist, für die Arbeitsbewegung verwendet werden. Aus beiden Figuren ist zu erkennen, daß sich die Achsen 4 und 5 stets in der Spitze des Werkzeuges 12 - schneiden. Somit ist bei jeglicher Bewegung um die zusätzlichen Achsen 4 und 5 sichergestellt, daß sich der Achsenschnittpunkt stets im Arbeitspunkt des Werkzeuges befindet.

An der Aufnahmefläche 9 ist des weiteren eine Führung 14 vorgesehen, die im wesentlichen parallel mit der durch Fräsmotor und Werkzeug hindurchführenden Achse ausgerichtet ist. Die Führung 14 erlaubt folglich eine translatorische Bewegung entlang einer sechsten Bewegungsache, die in Fig. 1 durch einen Pfeil auf dem Fräsermotor dargestellt ist, und das Bezugszeichen 6 trägt.

Auch diese Bewegungsachse wird stets durch den Arbeitspunkt 13 hindurchführen. Somit schneiden sich alle drei zusätzlichen Bewegungsachsen, also die vierte, die fünfte und die sechste Achse, im gleichen Punkt, dem Arbeitspunkt 13. Bei Einsetzen eines Werkzeuges mit anderer Länge wie dem vorhergehenden, muß der Programierer nur diese eine zusätzliche Längenveränderung eingeben, wonach das gesamte Program unverändert ablaufen kann.

Nachfolgend wird die Funktionsweise an Hand der in den Fig. 1 und 2 dargestellten Positionen näher beschrieben. Die in beiden Figuren mit dicken Linien eingezeichnete Position ist als 0-Position anzusehen. Sie zeigt den Fräsermotor 10 in der vertikalen Achsausrichtung. Diese Stellung ist mit dem Buchstaben A gekennzeichnet. Die weiteren Positionen des Werkzeuges und des Motors sind in den mit dünner Linie eingezeichneten Positionen B bis E dargestellt.

Soll eine Verschwenkung in die Position B stattfinden, also das Werkzeug auf 90°-Stellung zur vierten Achse gebracht werden, ist lediglich ein Verschwenken um 180° um die fünfte Achse notwendig.

Um danach in die Position C zu gelangen, muß zusätzlich eine Verschwenkung des gesamten Kopfes um die vierte Achse erfolgen. Um aus Position A in Position D zu gelangen, muß ein Verschwenken um 180° um die fünfte Achse und ein Verschwenkarm um 180° um die vierte Achse vorgenommen werden.

Soll wie in Fig. 2 dargestellt, direkt aus Position A in die Stellung C gefahren werden, muß ein gleichmäßiges Verschwenken um die vierte und fünfte Achse erfolgen und zwar 180° um die fünfte Achse und 90° um die vierte Achse. Um beispielsweise die Stellung E einzunehmen, also 45° zur Z-Achse, muß jede der beiden Schwenkachsen, nämlich die vierte und die fünfte, eine Dreh-bzw. Schwenkbewegung um 90° zulassen. In dieser Weise kann jede Position im Raum um den Arbeitspunkt 13 herum durch die entsprechende Zusammensetzung der beiden Schwenkbewegungen erzielt werden. Somit kann nur durch die einfache Programmierung bzw. Interpolation zweier Koordinaten bzw. Winkel jede beliebige Bearbeitungsposition eingenommen werden und somit jede räumlich noch so komplex ausgebildete Fläche bearbeitet werden. Die Bewegung entlang der sechsten Achse ergibt zudem noch den Längenausgleich bei unterschiedlicher Werkzeuglänge in einfacher Weise.

**Ansprüche**

1. Arbeitskopf, insbesondere Fräskopf mit einer Frässpindel und einem daran über eine Spannaufnahme befestigten Werkzeug, insbesondere für Bearbeitungszentren mit mehreren Bewegungsachsen, wobei eine erste, eine zweite und eine dritte Achse für translatorische Bewegungen nach X,Y und Z vorgesehen sind und mindestens eine zusätzliche Achse für eine weitere Bewegung angeordnet ist, dadurch **gekennzeichnet**, daß mindestens zwei der zusätzlichen Bewegungsachsen (4,5,6) in dem Arbeitskopf vorgesehen sind und daß sich diese Achsen (4,5,6,) im Arbeitspunkt - (13) des Werkzeuges (12) schneiden.

2. Arbeitskopf nach Anspruch 1, dadurch **gekennzeichnet**, daß die erste zusätzliche Achse, d.h. die vierte Achse (4), eine Schwenkachse für den gesamten Arbeitskopf ist, die mit der Z-Hauptachse gleichgerichtet angeordnet ist.

3. Arbeitskopf nach den Ansprüchen 1 und 2, dadurch **gekennzeichnet**, daß die zweite zusätzliche Achse, d.h. die fünfte Achse (5), eine Schwenkachse ist, die zur vierten Achse (4) geneigt angeordnet ist.

4. Arbeitskopf nach Anspruch 3, dadurch **gekennzeichnet**, daß die Neigung der fünften Achse in bezug auf die vierte Achse 45° beträgt.

5. Arbeitskopf nach den Ansprüchen 1 bis 3, dadurch **gekennzeichnet**, daß die vierte und die fünfte Achse über einen Schwenkarm (1) verbunden sind.

6. Arbeitskopf nach Anspruch 5, dadurch **gekennzeichnet**, daß der Schwenkarm um 45° zur vierten Achse nach unten geneigt ausgebildet ist.

7. Arbeitskopf nach mindestens einem der Ansprüche 1 bis 6, dadurch **gekennzeichnet**, daß an der unteren, inneren Seite des Schwenkarmes (1) ein die Frässpindel (10) mit Werkzeug (12) tragender und um die fünfte Achse verschwenkbarer Schwenkblock (7) angeordnet ist.

8. Arbeitskopf nach den Ansprüchen 1, 5 und 7, dadurch **gekennzeichnet**, daß zwischen der Frässpindel (10) und dem Schwenkblock (7) eine Führung (14) für eine translatorische Bewegung entlang einer dritten zusätzlichen Achse, d.h. einer sechsten Achse (6) vorgesehen ist.

9. Arbeitskopf nach Anspruch 8, dadurch **gekennzeichnet**, daß die sechste Achse (6) im wesentlichen parallel zur durch Frässpindel (10) und Werkzeug (12) führenden Achse angeordnet ist.

10. Arbeitskopf nach Anspruch 9, dadurch **gekennzeichnet**, daß die Frässpindel (10) ein Fräsmotor mit daran befestigter Spannzange (11) für das Werkzeug (12) ist.

FIG. 1

FIG. 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl 4) |
|---|---|---|---|
| X | US-A-3 359 861 (JOHNSON et al.) * Anspruch 1; Spalte 2, Zeilen 1-34; Figuren 2, 3 * | 1,3,47 | B 23 C 1/12 |
| A | | 2,5,6, 10 | |
| | --- | | |
| X | GB-A-1 258 273 (VERTIN) * Anspruch 1; Seite 1, Zeilen 10-18; Seite 2, Zeile 31 - Seite 3, Zeile 65; Figur 1 * | 1,2 | |
| A | | 8,10 | |
| | --- | | |
| A. | DE-A-2 252 366 (AUTOMOBILES PEUGEOT et al.) * Seiten 1, 2; Anspruch 1; Figur 1 * | 1 | |
| | --- | | RECHERCHIERTE SACHGEBIETE (Int. Cl.4) |
| A | INDUSTRIE-ANZEIGER, Band 94, Nr. 62, 28. Juli 1972, Seiten 1542, 1543, Essen; H. ESCH "Der geometrische Aufbau von 5-Achsen-Maschinen" * Seite 1543, Figur 4 "Bauformen 1-3" * | 1 | B 23 C 1/00 B 23 C 3/18 B 23 C 7/00 B 23 C 9/00 |
| | ----- | | |

Der vorliegende Recherchenbericht wurde für alle Patentansprüche erstellt.

| Recherchenort | Abschlußdatum der Recherche | Prüfer |
|---|---|---|
| BERLIN | 20-10-1986 | MARTIN A E W |